# EUROPÄISCHE PATENTANMELDUNG

(11) **EP 2 639 094 A1**
(43) Veröffentlichungstag der Anmeldung: **18.09.2013**
(21) Anmeldenummer: 13000953.3
(22) Anmeldetag: 26.02.2013
(51) Int. Cl.: B60K 15/03, F02D 19/02

(54) **Vorrichtung zur Druckregulierung für einen Flüssiggastank**

(30) Priorität: 28.02.2012 DE 202012001815 U; 28.01.2013 DE 102013001492
(71) Anmelder: Feldgebel, Peter, 68309 Mannheim (DE)
(72) Erfinder: Feldgebel, Peter, 68309 Mannheim (DE)

(57) **Zusammenfassung**

Bei sehr kalten Außentemperaturen ist es nicht gewährleistet, dass an den Auslassventilen eines Flüssiggastankbehälters zum Betreiben einer Autogasanlage noch ein ausreichender Druck vorhanden ist. Ist für die Anlage ein Betriebsdruck in der Ansaugleitung von 4 oder 5 bar notwendig, kann bei extremen Temperaturverhältnissen die Autogasanlage nicht in Betrieb genommen werden. Die neue Vorrichtung ermöglicht, einen definierten Druck unabhängig von der vorherrschenden Außentemperatur am Auslassventil des Flüssiggastankbehälters zu erzeugen.

Da sich der Innendruck des Tankbehälters (1) aus den spezifischen Stoffkennwerte der Gemischanteile und sich dem daraus resultierenden Gleichgewicht zwischen flüssiger und gasförmiger Phase ergibt, das von der Temperatur abhängig ist, wird dies Gleichgewicht nun reguliert, indem im Tank oder an der Aussenwandung eine Vorrichtung (2) integriert wird, durch die dem Flüssiggas eine gezielte Wärmemenge zugeführt wird.

Die Vorrichtung ermöglicht den Betrieb einer Autogasanlage mit Flüssiggas auch bei tiefen Temperaturen insbesondere zum Betrieb von Dieselmotoren mit Flüssiggas.

## Beschreibung

Die Erfindung betrifft eine Vorrichtung, mit der der Innendruck in einem Flüssiggastankbehälter kontrolliert gesteuert wird, um Fahrzeugmotoren zu betreiben. Die Vorrichtung gewährleistet insbesondere, dass ein bestimmter Druck auch bei kalten Außentemperaturen an den Auslassventilen des Tankbehälters für die Ansaugleitung (vorzugsweise 4 oder 5 bar) einer Autogasanlage zur Verfügung steht.

Flüssiggas (LPG oder Autogas) wird seit vielen Jahren als alternativer Kraftstoff für Verbrennungsmotoren eingesetzt. Der Kraftstoff besteht hauptsächlich aus einem Propan/Butan-Gemisch, der in flüssiger Form in einem Tankbehälter unter Druck (in der Regel 8 bis 15 bar) gespeichert wird.

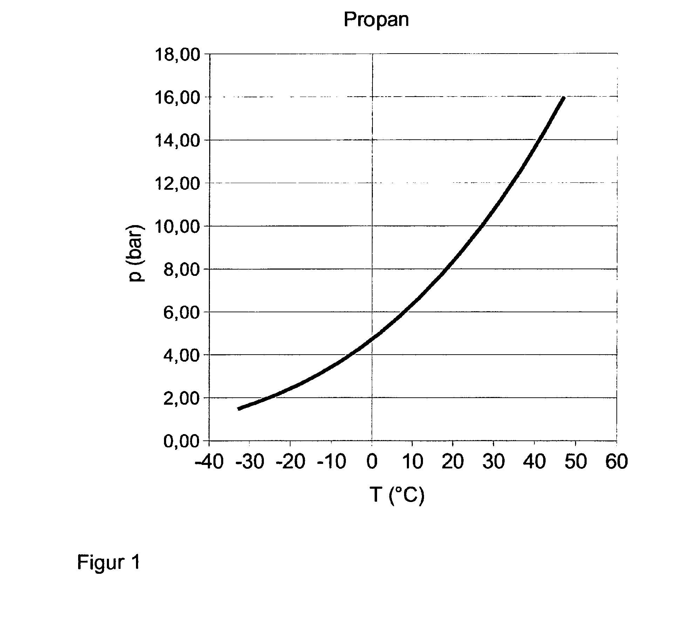

Aufgrund der spezifischen Stoffkennwerte der Gemischanteile stellt sich im Tankbehälter ein Gleichgewicht zwischen flüssiger und gasförmiger Phase ein, das von Druck- und Temperaturwerten abhängig ist. Anhand des Verlaufs der Dampfdruckkurven erkennt man, dass bei tiefen Temperaturen der Druck der gasförmigen Komponenten deutlich abnimmt (s. Figur 1).

Wie man der Dampfdruckkurve von Propan entnehmen kann, ist es bei Temperaturen von -8°C nicht mehr möglich einen Druck der gasförmigen Komponente von 4 bar vorzuhalten (s. Figur 1). Möchte man einen Betriebsdruck in der Ansaugleitung aufrecht erhalten, ist dies bei sehr kalten Außentemperaturen insbesondere unterhalb von -8° C nicht mehr möglich. Dadurch ist insbesondere der Betrieb von Dieselmotoren mit Flüssiggas bei winterlichen Temperaturen, die unterhalb von minus 10° C liegen, nach dem derzeitigen Stand der Technik nicht machbar.

Die vorliegende Erfindung ermöglicht nun, den Innendruck im Tankbehälter kontrolliert zu variieren. Dadurch kann auch Flüssiggas aus einem Tankbehälter bei Außentemperaturen, die deutlich unter -8°C liegen, in der Weise entnommen werden, dass der gewünschte Betriebsdruck in der Ansaugleitung insbesondere für den Betrieb von Dieselmotoren bereits ab dem Auslassventil des Tankbehälters gewährleistet ist. Mit dieser Vorrichtung ergeben sich sogar bisher nicht vorhandene Möglichkeiten, einen vorgegebenen Flüssiggasdruck am Auslassventil des Tankbehälters für Weiterentwicklungen der Autogasanlage gezielt einzustellen.

Dies wird dadurch gelöst, indem dem Flüssiggas im Tankbehälter eine gezielte Wärmemenge in der Weise zugeführt wird, so dass der erwünschte Betriebsdruck in der Ansaugleitung erreicht wird. Die Wärmezufuhr kann erfindungsgemäß in unterschiedlicher Ausführung erfolgen.

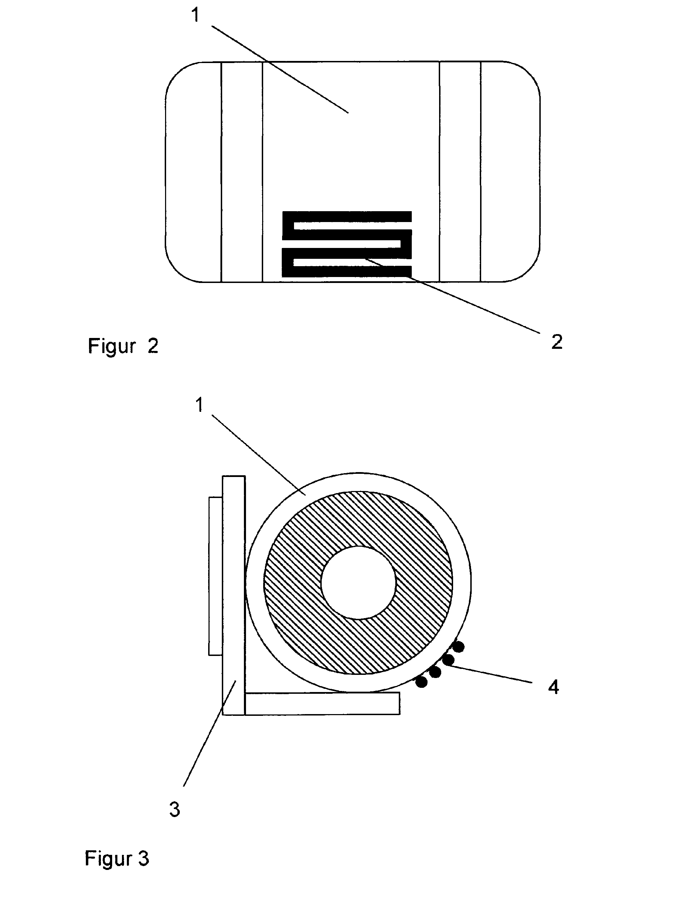

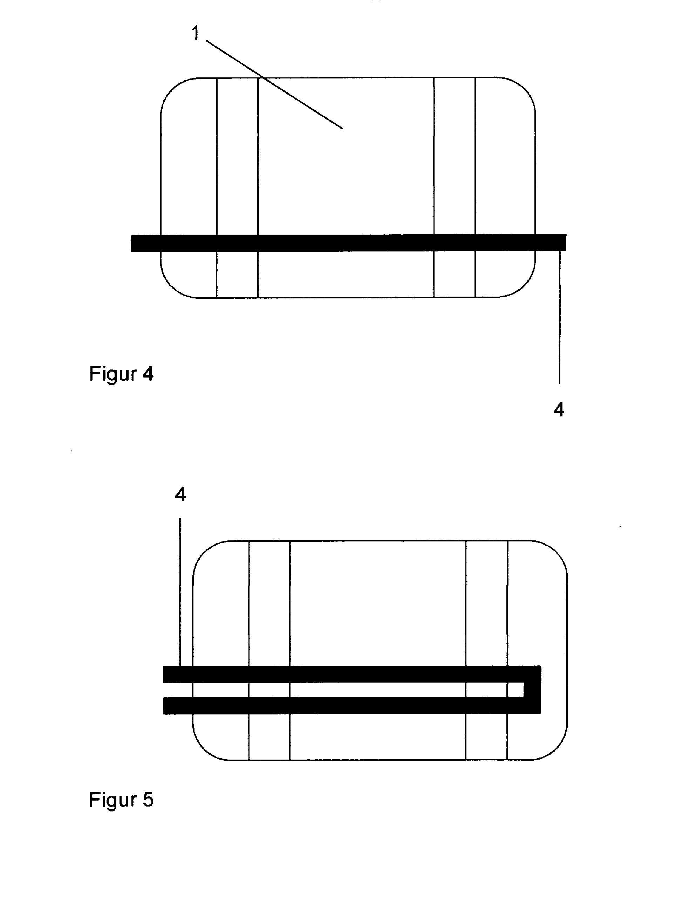

Die Wärmeübertragung kann beispielsweise über eine oder mehrere Wasserleitungen erfolgen, die so angebracht sind, dass sie entweder durch den Tank oder außen am Tank entlang verlaufen. Die Leitungen können als ein einziger Strang oder Doppelstrang oder spiralförmig angefertigt sein (s. Figur 2 bis 5).

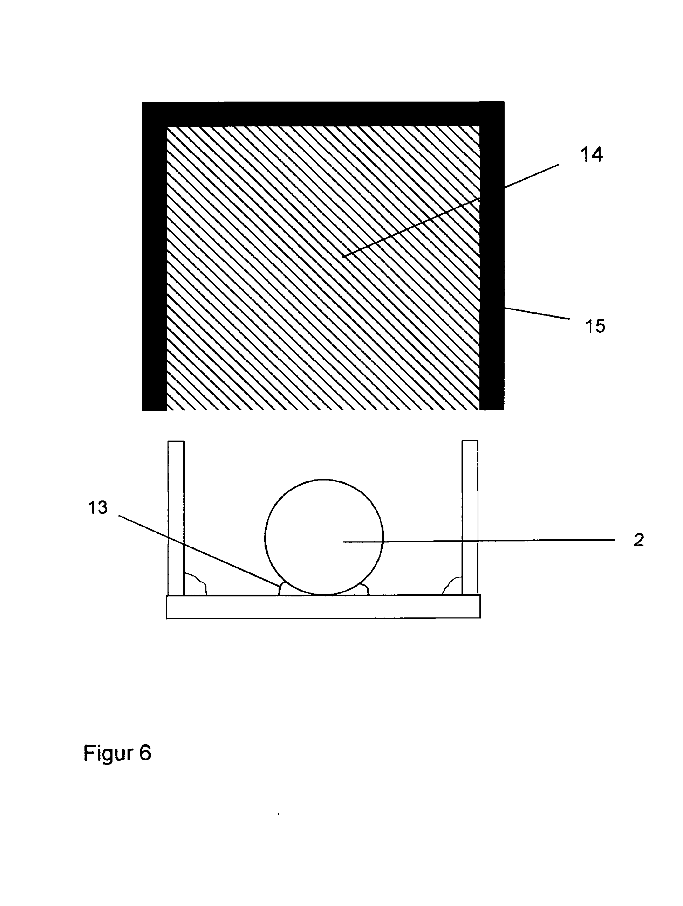

Befinden sich die Wasserleitungen an der Außenseite des Tankbehälters, dann sind die Wasserkollektoren beispielsweise so angefertigt, dass zum Tankbehälter eine geeignete Wärmeübertragungsplatte mit entsprechender Befestigungsvorrichtung wie z.B. Schweißpunkte angebracht ist und zur Umgebung eine entsprechende Wärmeisolierung (Figur 6).

An Stelle von Wasser kann durch die Leitungen auch ein erwärmtes Gas strömen oder eine andere für die Wärmezufuhr geeignete Flüssigkeit.

In einer weiteren Ausführung kann der Tankbehälter doppelwandig in der Weise gestaltet sein, dass der Zwischenraum mit einer erwärmten Flüssigkeit oder einem erwärmten Gas gefüllt ist.

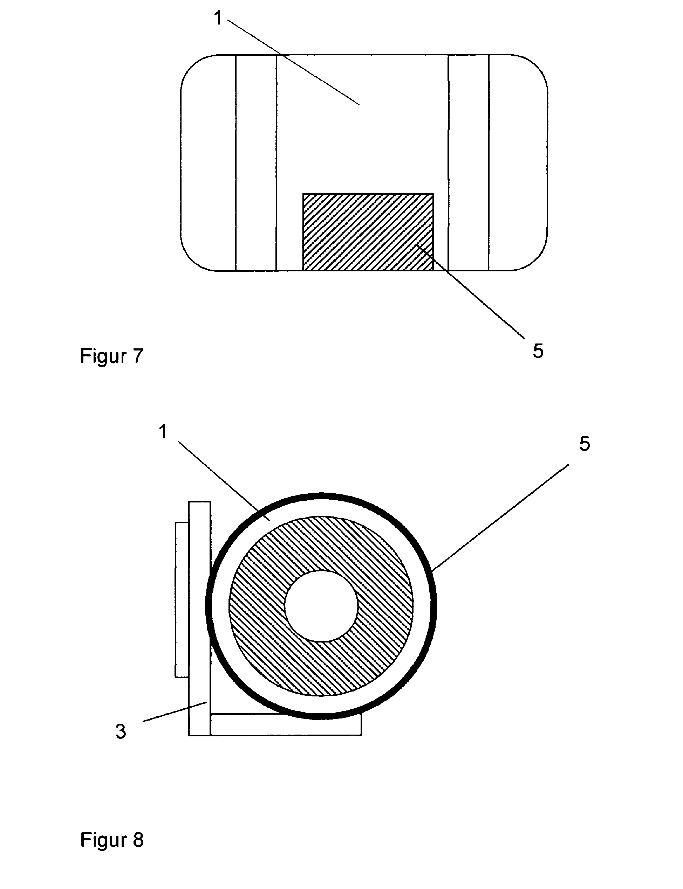

Eine weitere Ausführung für die Wärmeübertagung besteht in einer Vorrichtung, indem eine elektrische Heizmatte oder ein anderes durch elektrischen Strom erwärmtes Bauteil im Tankbehälter oder an der Außenseite des Tankbehälters angebracht wird. Dabei kann sie nur eine bestimmte Fläche abdecken oder den gesamten Tank umhüllen (Figur 7 und 8).

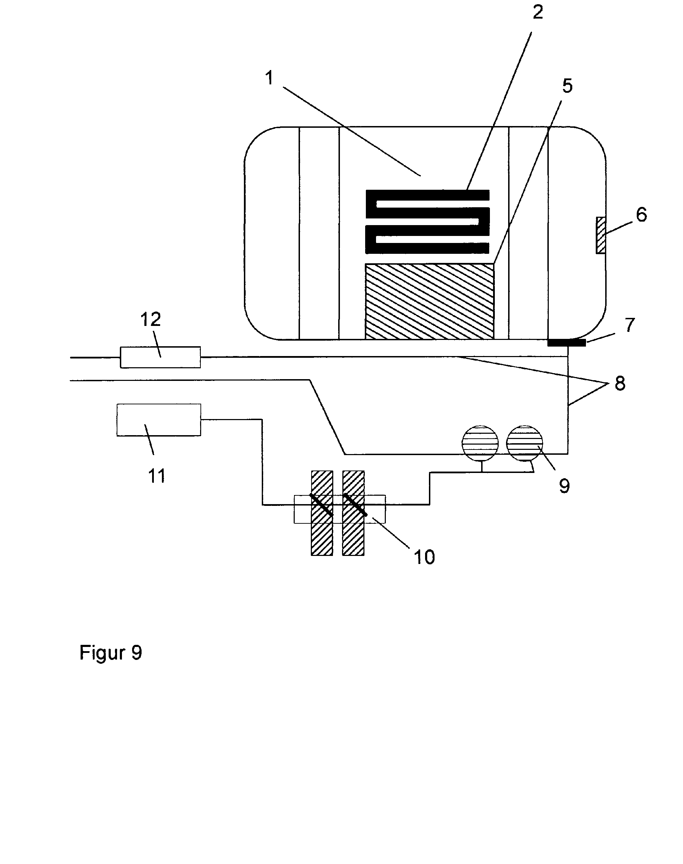

Die Steuerung der Wärmezufuhr übernimmt eine Messeinrichtung, wie in Figur 9 dargestellt. Die Messeinrichtung verfügt über eine elektrische oder/und eine mechanische Abschaltung der Wasser- oder Elektroleitungen. Die Messeinrichtung kontrolliert Druck, Temperatur, Durchflussmenge und Dichte. Sie bietet Schutz vor Überhitzung oder Durchbruch oder andere störende Faktoren.

Beschreibung zu den Abbildungen:
Fig. 1 Dampfdruckkurve von Propan
Fig. 2 Heizvorrichtung mit Leitungen innerhalb des Tankbehälters
Fig. 3 Mögliche Montageposition mit Heizung an der Außenfläche
Fig. 4 Ausführung mit Leitungen am Tank in gerader Ausführung
Fig. 5 Ausführung mit Leitungen am Tank in gebogener Ausführung
Fig. 6 Wasserleitung mit Wärmeübertragungsplatte und Wärmedämmung
Fig. 7 Ausführung mit elektrischer Heizmatte im Tankbehälter
Fig. 8 Ausführung mit elektrischer Heizmatte außen am Tank
Fig. 9 Messeinheit zur Steuerung für die Druckregulierung

Erklärung zur Beschriftung:
1. Gastank
2. Heizung innerhalb des Tankbehälters mit Anschluss für Wasser, Gas oder anderes Medium
3. Tankhalterung
4. An der Außenfläche angebrachte Heizung
5. Heizmatten
6. Tankanzeige / Füllstandanzeige
7. Sicherheitsventil
8. Gasleitung zum Motor / Verdampfer
9. Messeinrichtung für Druck, Temperatur, Durchflussmenge, Dichte
10. Elektrische und / oder mechanische Abschaltung der Wasserzufuhr oder Elektroleitungen
11. Elektronische Steuerung und Messeinrichtung
12. Externe mechanische oder elektrische Pumpe
13. Wärmeübertragungsplatte mit Schweißpunkten
14. Wärmedämmung
15. Schutzabdeckung

## Patentansprüche

1. Vorrichtung zur Druckregulierung von Flüssiggas (LPG) in einem Tankbehälter
**dadurch gekennzeichnet,**
**dass** durch eine elektronisch gesteuerte Heiz- oder Kühlvorrichtung der Flüssiggasdruck im Tankbehälter zur Betreibung eines Verbrennungsmotors, vorzugsweise eines Dieselmotors, kontrolliert eingestellt wird.

2. Vorrichtung nach Anspruch 1
**dadurch gekennzeichnet,**
**dass** die Heiz- oder Kühlvorrichtung aus einem Rohrleitungssystem besteht, das mit einem zur Wärmeübertragung geeignetem flüssigen oder gasförmigen Medium durchströmt wird, vorzugsweise Wasser.

3. Vorrichtung nach Anspruch 2
**dadurch gekennzeichnet,**
**dass** die Leitungen innerhalb des Tankbehälters (2) angebracht sind, wobei diese aus einer einzigen geraden Leitung, einer gebogenen Leitung oder einer spiralförmig angeordneten Leitung besteht.

4. Vorrichtung nach Anspruch 2
**dadurch gekennzeichnet,**
**dass** die Leitungen an der Außenfläche des Tankbehälters (4) angebracht sind, wobei die Leitungen nur einen Teil der Außenfläche oder die gesamte Außenfläche beheizen.

5. Vorrichtung nach Anspruch 2 bis 4
**dadurch gekennzeichnet,**
**dass** das Leitungssystem aus voneinander getrennten Leitungen besteht

6. Vorrichtung nach Anspruch 4
**dadurch gekennzeichnet,**
**dass** die Leitungen aus einem Kollektorsystem bestehen, dass über eine Wärmeübertragungsplatte (13) an der Außenwand befestigt ist und eine Wärmeisolierung (14) zur Umgebung aufweist.

7. Vorrichtung nach Anspruch 1
**dadurch gekennzeichnet,**
**dass** der Tankbehälter eine doppelwandige Hülle mit einem Zwischenhohlraum aufweist, deren Hohlraum mit einem zur Wärmeübertragung geeignetem festen, flüssigen oder gasförmigen Medium gefüllt ist, vorzugsweise Wasser.

8. Vorrichtung nach Anspruch 1
**dadurch gekennzeichnet,**
**dass** die Heizvorrichtung aus einem elektrisch erwärmten Bauteil (5), insbesondere einer Heizmatte besteht.

9. Vorrichtung nach Anspruch 8
**dadurch gekennzeichnet,**
**dass** die Heizvorrichtung innerhalb des Tankbehälters angebracht ist.

10. Vorrichtung nach Anspruch 8
**dadurch gekennzeichnet,**
**dass** die Heizvorrichtung außen am Tankbehälter ganzflächig oder nur an einer Teilfläche angebracht ist

11. Vorrichtung nach Anspruch 1
**dadurch gekennzeichnet,**
**dass** der Druck am Auslassventil über eine elektronische Heiz- oder Kühlsteuerung und Messeinrichtung (9 und 11) geregelt wird, indem eine elektrische und / oder mechanische Abschaltung (10) der Wasserzufuhr oder des elektrischen Stroms der Elektroleitungen erfolgt.

12. Vorrichtung nach Anspruch 11
**dadurch gekennzeichnet,**
**dass** durch eine Messeinheit (9) zur Erfassung von Druck, Temperatur, Durchflussmenge und Dichte die Regelung einen Überhitzungsschutz und eine Durchbruchsicherung gewährleistet.

13. Vorrichtung nach Anspruch 11
**dadurch gekennzeichnet,**
**dass** die Regelung einen Mindestdruck der gasförmigen Komponente von 4 bar gewährleistet.

14. Vorrichtung nach Anspruch 11
**dadurch gekennzeichnet,**
**dass** die Regelung auch bei tiefen Temperaturen, vorzugsweise unter 0° C, einen ausreichenden Druck, vorzugsweise 4 bis 5 bar, zur Betreibung eines Verbrennungsmotors, insbesondere eines Dieselmotors, gewährleistet.
